# EUROPÄISCHE PATENTSCHRIFT

(11) **EP 0 857 624 B1**
(45) Veröffentlichungstag und Bekanntmachung des Hinweises auf die Patenterteilung: **19.12.2001**
(21) Anmeldenummer: 98101503.5
(22) Anmeldetag: 29.01.1998
(51) Int. Cl.: B60R 21/20, B60R 21/22

(54) **Säulenverkleidung für Säulen von Kraftfahrzeugen**
Pillar garnish for motor vehicle pillars
Habillage de montants pour montants de véhicules automobiles

(30) Priorität: 05.02.1997 DE 19704195
(43) Veröffentlichungstag der Anmeldung: 12.08.1998
(73) Patentinhaber: IBS Brocke GmbH & Co. KG, 51597 Morsbach (DE)
(72) Erfinder: Beer, Bernhard, 51545 Waldbröl (DE)
(74) Vertreter: Godemeyer, Thomas, Dr.

(56) Entgegenhaltungen:
- DE-A- 19 647 679
- DE-U- 29 613 781
- GB-A- 2 278 812
- US-A- 5 605 346

## Beschreibung

Die Erfindung betrifft eine Säulenverkleidung für Säulen von Kraftfahrzeugen mit integriertem Seitenairbag bestehend aus einem Öffnungsbereich A und einem Befestigungsbereich B.

Zum Schutz von Insassen von Kraftfahrzeugen ist es inzwischen üblich geworden, Aufprallsysteme, insbesondere Airbags in Kraftfahrzeuge einzubauen. Diese Airbags werden im allgemeinen im Frontbereich des Kraftfahrzeugs, insbesondere im Lenkrad oder im vorderen Armaturenbrett integriert.

Mittlerweile werden jedoch auch zusätzliche Seitenaufprallsysteme, sogenannte Seitenairbags in Kraftfahrzeugen eingesetzt. Diese sind beispielsweise in den Türverkleidungen oder in den Seitenverkleidungen der Sitze integriert und werden bei einem entsprechenden Seitenaufprall ausgelöst. Derartige Rückhaltesysteme können aber auch in den Säulenverkleidungen von Kraftfahrzeugen integriert werden. Die vorliegende Erfindung betrifft eine Verbesserung einer solchen Säulenverkleidung für ein integriertes Seitenaufprallsystem.

Aus dem Stand der Technik ist es bekannt, derartige Seitenverkleidungen an verschiedenen punktförmigen Befestigungspunkten mit der Karosseriesäule zu verbinden. Hierbei erfolgt im allgemeinen eine steife Anbindung an den Fahrzeugrohbau. Der Öffnungsbereich eines solchen Seitenteils, durch den beim Auslösen des Airbags der Airbag austreten kann, wird im allgemeinen aus weichen thermoplastischen Werkstoffen hergestellt oder mit einem Scharnier ausgebildet, wie dies beispielsweise in der DE 197 00 584.5 vorgeschlagen wird. Diese Druckschrift beschreibt eine Säulenverkleidung, die mittels der Hinterspritz- oder Hinterpresstechnik hergestellt wird. Diese enthält eine Dekorschicht auf dem Kunststoffformteil, wobei entlang einer Linie in Längsrichtung der Säulenverkleidung die Wandstärke des Kunststoffformteils auf der Rückseite verringert ist. Dies führt beim Auslösen des Airbags zu einem Umklappen im Öffnungsbereich der Säulenverkleidung, so daß in diesem Bereich der ausgelöste Airbag austreten kann. Diese aufgebrachten Dekorschichten verhindern ein Abreißen des Kunststoffformteils.

DE 43 08 884 A1 beschreibt eine Abdeckung für eine Airbagvorrichtung, wobei die Abdeckung eine Öffnung eines Behälters abdeckt, der einen Luftsack in einer zusammengefalteten Form aufnimmt. Beim Entfalten des Luftsackes wird der Deckel, der durch den Luftsack mit Druck beaufschlagt wird, zum Öffnen teilweise oder vollständig in einer lukenartigen Form verdreht. Der Deckel ist mit einem linearen biegbaren Teil oder Bereich versehen, wodurch sich der Deckel nach hinten biegen kann.

DE 195 30 346 beschreibt ebenfalls eine Abdeckung zur Abdekkung der Öffnung eines Airbagsaufnahmeraumes. An einem Grundkörper des Deckels ist wenigstens ein Halteband befestigt, das an der Armaturentafel oder einer Lenkradnabe zur Bildung eines beweglichen Scharniers angebracht ist.

Die DE 296 03 316 U1 beschreibt eine Seitenaufprallschutzeinrichtung für Fahrzeuginsassen mit einem aufblasbaren Kopf-Gassack, der in nicht entfaltetem Zustand unter einem Verkleidungsteil am Dachrahmen eines Fahrzeuges angeordnet ist. Der Kopf-Gassack ist mit Befestigungsösen versehen und wird am Dachrahmen befestigt.

Bei den bisher bekannten Säulenverkleidungen des Standes der Technik ist zwar teilweise bereits eine flexible Gestaltung des Öffnungsbereiches A der Säulenverkleidung vorgesehen, die Anbindung an die Karosseriesäule erfolgt jedoch im allgemeinen in einer steifen Ausführungsform, so daß beim Auslösen des Airbags die Gefahr besteht, daß aufgrund der mangelnden Flexibilität die gesamte Säulenverkleidung abreißt, was zu Verletzungen bei den Insassen oder zur Beschädigung des Airbags führen kann.

Die technische Aufgabe der Erfindung ist es daher, eine verbesserte Säulenverkleidung zur Verfügung zu stellen, die die oben genannten Nachteile nicht aufweist und insbesondere so an der Karosseriesäule befestigt ist, daß es beim Auslösen des Airbags nicht zu einem Abreißen des gesamten Seitenteils kommen kann.

Diese technische Aufgabe wird gelöst durch eine Säulenverkleidung für Säulen von Kraftfahrzeugen mit integriertem Seitenairbag bestehend aus einem Öffnungsbereich A und einem Befestigungsbereich B, wobei im Öffnungsbereich A ein oder mehrere Scharnierpunkte oder Knickpunkte 1 angeordnet sind und im Befestigungsbereich B ein oder mehrere flexible Halteelemente 5 zur Befestigung der Säulenverkleidung an der Karosseriesäule 2 angeordnet sind.

Mit dieser flexiblen Anbindung des Befestigungsbereiches B an die Karosseriesäule 2 wird erreicht, daß es beim Auslösen des Airbags nicht zu einem Abreißen der gesamten Säulenverkleidung kommt. Hierdurch wird das Verletzungsrisiko der Insassen erheblich herabgesetzt, da aufgrund der flexiblen Gestaltung der Befestigung an der Karosseriesäule 2 die beim Auslösen des Airbags entstehenden Kräfte abgefangen werden können, ohne daß es zu einem Abreißen der Säulenverkleidung kommt.

In einer bevorzugten Ausführungsform, weist die Säulenverkleidung Scharnierpunkte oder Knickpunkte 1 auf, die innenliegend angeordnet sind. Diese Knick- und Scharnierpunkte können bevorzugt beim Spritzgießen des Teiles angeordnet werden. Diese führen dazu, daß das Teil in diesem Bereich sehr flexibel gestaltet ist, so daß es zu einem Wegklappen kommt, wenn der Seitenairbag ausgelöst wird. Ein ähnlicher Effekt kann auch durch eine entsprechende Wanddickenreduzierung im Öffnungsbereich A erreicht werden, so daß die Abdeckung ebenfalls flexibel gestaltet ist oder Druckbelastungen auf die Säule aufgefangen werden.

Im Befestigungsbereich B enthält die erfindungsgemäße Säulenverkleidung bevorzugt ein oder mehrere Abstützrippen 6. Diese Abstützrippen 6 sind bevorzugt über dem Befestigungspunkt 4 oder seitlich des Befestigungspunktes 4 angeordnet und bewirken eine größere Stabilität der gesamten Säulenverkleidung in Ruhestellung. Beispielsweise können hierdurch unerwünschte Vibrationen beim Fahren verringert werden.

In einer weiteren bevorzugten Ausführungsform sind die flexiblen Halteelemente 5 um den Befestigungspunkt 4 herum angeordnet. Dies führt dazu, daß die beim Auslösen des Seitenairbags auftretenden Kräfte, die im Befestigungspunkt besonders hoch sind, durch die flexible Anbindung der Halteelemente 5 abgefangen werden. Durch diese Maßnahme wird die Gefahr des Abreißens des Befestigungspunktes und damit der gesamten Säulenverkleidung erheblich verringert.

Als zusätzliche Maßnahme können am Ende des Befestigungsbereichs B eine oder mehrere Fangrippen 7 angeordnet sein. Diese Maßnahme verhindert ein Durchrutschen oder Verschieben der Säulenverkleidung beim Auslösen des Airbags.

Als weitere Maßnahme ist es bevorzugt, daß die Wanddicke im Öffnungsbereich A reduziert ist.

Die nachfolgenden Figuren sollen die Erfindung näher erläutern.

Figur 1 zeigt eine erfindungsgemäße Säulenverkleidung im Querschnitt, wie sie an einer Karosseriesäule angeordnet ist.

Figur 2 zeigt das Verhalten des erfindungsgemäßen Säulenelements zu Beginn des Auslösens des Airbags.

Figur 3 zeigt das weitere Verhalten des erfindungsgemäßen Säulenelements beim Auslösen des Airbags.

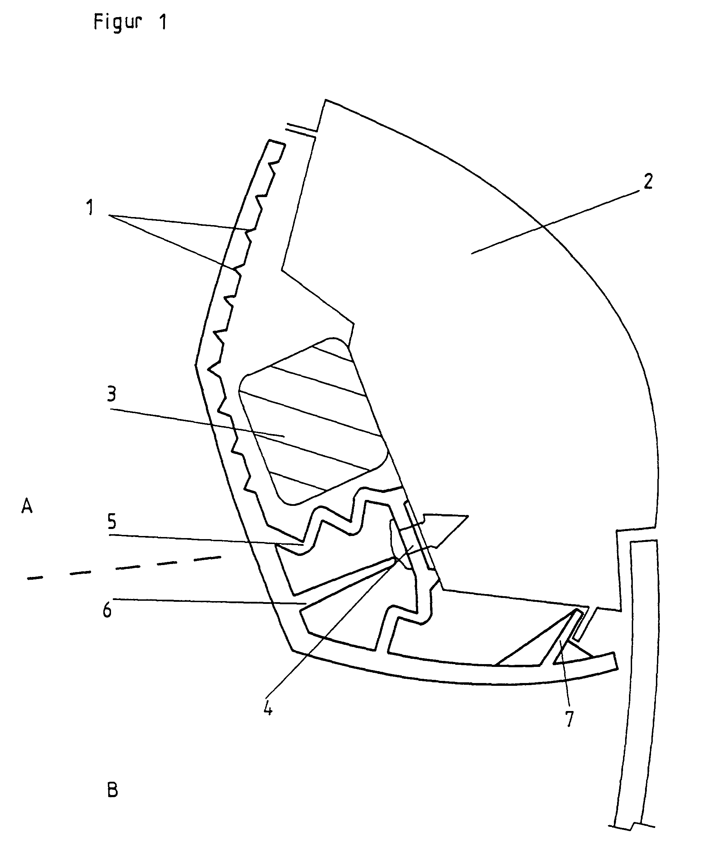

In Figur 1 ist zunächst der Öffnungsbereich A als oberer Bereich der Säulenverkleidung zu erkennen. Der Befestigungsbereich B ist der untere Teil der Säulenverkleidung.

Mit der Ziffer 1 sind die Knick- oder Scharnierpunkte im Öffnungsbereich A der Säulenverkleidung bezeichnet. Diese bewirken ein Zurückklappen des gesamten Öffnungsbereiches A beim Auslösen des Airbags. Mit der Ziffer 2 ist die Karosseriesäule bezeichnet, mit der Ziffer 3 der Airbag. Im Befestigungsbereich B ist der Befestigungspunkt 4 bezeichnet, an dem die Säulenverkleidung über ein entsprechendes Befestigungsmittel an der Karosseriesäule 2 befestigt wird. Um diesen Befestigungspunkt 4 herum sind die flexiblen Halteelemente 5 angeordnet. Diese dienen einerseits zur Abstützung der Säulenverkleidung auf der Karosseriesäule 2 und sind andererseits auch so konstruiert, daß sie beim Auslösen des Airbags entsprechend nachgeben. Als weitere zusätzlich stabilisierende Maßnahme ist eine Abstützrippe 6 vorgesehen, die über dem Befestigungspunkt 4 liegt und der Säulenverkleidung in Ruhestellung eine bessere Stabilität und Vibrationsfreiheit verleiht. Figur 1 zeigt weiterhin im unteren Bereich des Befestigungsbereiches B eine oder mehrere Fangrippen, mit denen verhindert werden soll, daß beim Auslösen des Airbags die Säulenverkleidung abrutscht oder sich verschiebt. Die Fangrippen dienen somit als Stütze.

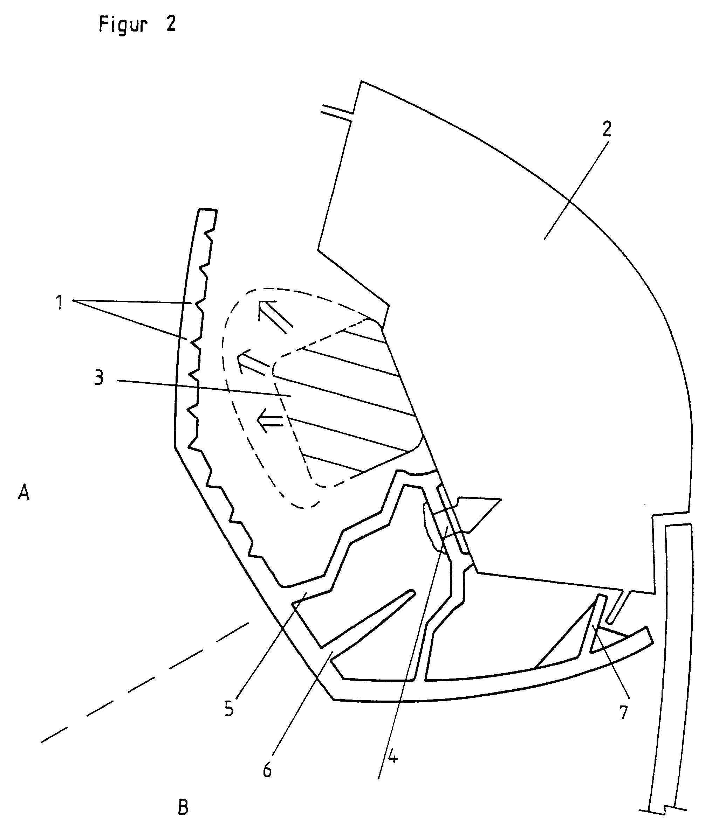

Figur 2 zeigt die erfindungsgemäße Säulenverkleidung zu Beginn der Auslösung des Airbags 3. Aus der Zeichnung ist zu erkennen, daß der gesamte Öffnungsbereich A beim Auslösen des Airbags zurückweicht und insbesondere die flexiblen Halteelemente 5 dem Druck des sich öffnenden Airbags nachgeben. Hierdurch wird die Kraft auf den Befestigungspunkt 4 so stark verringert, daß ein Abreißen verhindert wird.

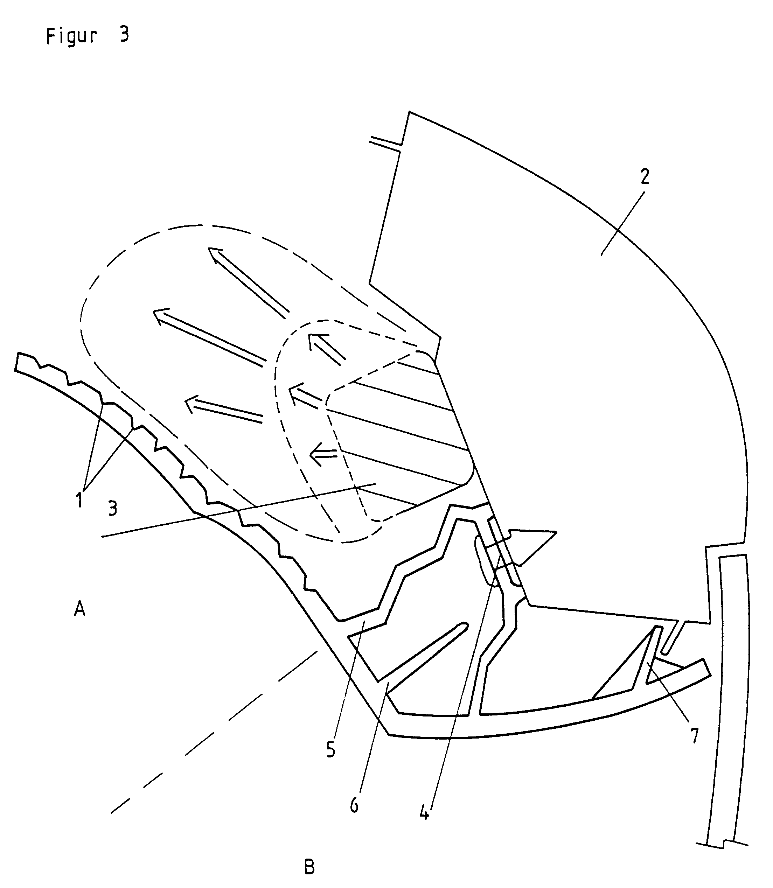

Figur 3 schließlich zeigt die spätere Auslösungsphase, bei der der Öffnungsbereich A bereits vollständig wegklappt. Durch die so entstandene Öffnung kann der ausgelöste Airbag nun in den Innenraum des Fahrzeuges dringen.

Die erfindungsgemäße Säulenverkleidung stellt ein neue Möglichkeit zur Verfügung, Seitenairbags in die Säulenverkleidung von Kraftfahrzeugen zu integrieren. Durch den Aufbau der erfindungsgemäßen Säulenverkleidung mit entsprechenden flexiblen Halteelementen 5 im Befestigungsbereich B ist sichergestellt, daß es beim Auslösen des Airbags nicht zu einem Abreißen der Säulenverkleidung kommt und die Insassen hierdurch nicht gefährdet werden. Durch die Konstruktion des Öffnungsbereichs A wird gewährleistet, daß sich der ausgelöste Airbag ohne wesentliche Behinderung der Säulenverkleidung schnell und frei ausdehnen kann, ohne daß es zu einem Abreißen von Teilen im Öffnungsbereich A kommt.

Auf diese Art und Weise wird die funktionsgerechte Auslösung des Seitenairbags gewährleistet und das Risiko, daß Verletzungen bei den Insassen aufgrund abgerissener oder zersplitterter Teile der Säulenverkleidungen auftreten, reduziert.

Derartige Säulenverkleidungen können in einem Prozeßschritt hergestellt werden mittels des Spritzgußverfahrens. Eine weitere Möglichkeit, derartige Säulenverkleidungen insbesondere für Kraftfahrzeuge höheren Standards herzustellen, besteht darin die Hinterspritz- oder Hinterpresstechnik anzuwenden. Dabei wird eine Textilschicht oder eine textilähnliche Folie mit einem entsprechenden Formteil aus Kunststoff hinterspritzt oder hinterpresst. Die dabei entstehenden Säulenverkleidungen weisen dann eine Dekorschicht auf, die aus Textil oder textilähnlichen Folien besteht und ein optisch ansprechenderes Aussehen besitzt.

Die Herstellung von Säulenverkleidungen kann aber auch ohne Dekorschicht durch das Spritzgußverfahren erfolgen. Auf die so hergestellten Formteile können für den Einbau in höherwertige Fahrzeuge auch Dekorschichten nachträglich aufkaschiert werden.

### Bezugszeichen

- A: Öffnungsbereich
- B: Befestigungsbereich
- 1: Knick- oder Scharnierpunkte
- 2: Karosseriesäule
- 3: Airbag
- 4: Befestigungspunkt
- 5: flexibles Halteelement
- 6: Abstützrippen
- 7: Fangrippen

## Patentansprüche

1. Säulenverkleidung für Säulen von Kraftfahrzeugen mit integriertem Seitenairbag bestehend aus einem Öffnungsbereich (A) und einem Befestigungsbereich (B), wobei im Öffnungsbereich (A) ein oder mehrere Scharnierpunkte oder Knickpunkte (1) angeordnet sind, **dadurch gekennzeichnet, daß** im Befestigungsbereich (B) ein oder mehrere flexible Halteelemente (5) zur Befestigung der Säulenverkleidung an der Karosseriesäule (2) angeordnet sind.

2. Säulenverkleidung nach Anspruch 1 **dadurch gekennzeichnet, daß** die Scharnierpunkte oder Knickpunkte (1) innenliegend angeordnet sind.

3. Säulenverkleidung nach den Ansprüchen 1 oder 2 **dadurch gekennzeichnet, daß** das flexible Halteelement (5) ein oder mehrere Abstützrippen (6) enthält.

4. Säulenverkleidung nach Anspruch 3 **dadurch gekennzeichnet, daß** die Abstützrippen (6) über dem Befestigungspunkt (4) oder seitlich des Befestigungspunktes (4) angeordnet sind.

5. Säulenverkleidung nach den Ansprüchen 1 bis 3 **dadurch gekennzeichnet, daß** die flexiblen Halteelemente (5) um den Befestigungspunkt (4) herum angeordnet sind.

6. Säulenverkleidung nach den Ansprüchen 1 bis 5 **dadurch gekennzeichnet, daß** die Fangrippen (7) am Ende des Befestigungsbereiches (B) angeordnet sind.

7. Säulenverkleidung nach den Ansprüchen 1 bis 6 **dadurch gekennzeichnet, daß** die Wanddicke im Öffnungsbereich (A) reduziert ist.

## Claims

1. A pillar garnish for pillars of motor vehicles with integrated lateral air bag, consisting of an opening region (A) and a fixing region (B), wherein one or more hinge points or bend points (1) are arranged within opening region (A), **characterized in that** one or more flexible holding members (5) are arranged within fixing region (B) to secure the pillar garnish on the car body pillar (2).

2. The pillar garnish according to claim 1, **characterized in that** the hinge points or bend points (1) are arranged inside.

3. The pillar garnish according to claim 1 or 2, **characterized in that** the flexible holding member (5) includes one or more support ribs (6).

4. The pillar garnish according to claim 3, **characterized in that** the support ribs (6) are arranged above fixing point (4) or laterally of fixing point (4).

5. The pillar garnish according to claims 1 to 3, **characterized in that** the flexible holding members (5) are arranged around fixing point (4).

6. The pillar garnish according to claims 1 to 5, **characterized in that** guard ribs (7) are arranged at the end of fixing region (B).

7. The pillar garnish according to claims 1 to 6, **characterized in that** the wall thickness is reduced within opening region (A).

## Revendications

1. Habillage de montants pour montants de véhicules automobiles avec un airbag latéral intégré se composant d'une zone d'ouverture (A) et d'une zone de fixation (B), un ou plusieurs points à charnière ou points articulés (1) étant prévus dans ladite zone d'ouverture (A), **caractérisé par le fait qu'**un ou plusieurs éléments flexibles de fixation (5) destinés à fixer l'habillage de montants sur le montant de carrosserie (2) sont prévus dans la zone de fixation (B).

2. Habillage de montants selon la revendication 1, **caractérisé par le fait que** les points à charnière ou points articulés (1) sont disposés à l'intérieur.

3. Habillage de montants selon les revendications 1 ou 2, **caractérisé par le fait que** l'élément flexible de fixation (5) comprend une ou plusieurs nervures d'appui (6).

4. Habillage de montants selon la revendication 3, **caractérisé par le fait que** les nervures d'appui (6) sont disposées au-dessus du point de fixation (4) ou latéralement du point de fixation (4).

5. Habillage de montants selon les revendications 1 à 3, **caractérisé par le fait que** les éléments flexibles de fixation (5) sont disposés autour du point de fixation (4).

6. Habillage de montants selon les revendications 1 à 5, **caractérisé par le fait que** les nervures d'arrêt (7) sont disposées au bout de la zone de fixation (B).

7. Habillage de montants selon les revendications 1 à 6, **caractérisé par le fait que** l'épaisseur de la paroi dans la zone de l'ouverture (A) est réduite.
